(19) Europäisches Patentamt
European Patent Office
Office européen des brevets

(11) **EP 2 014 915 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
*F03D 7/00* (2006.01)    *F03D 7/04* (2006.01)

(21) Anmeldenummer: **08007886.8**

(22) Anmeldetag: **24.04.2008**

(54) **Drehzahlbestimmung**

Determination of rotational speed

Détermination de la vitesse de rotation

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.06.2007 DE 102007026995**

(43) Veröffentlichungstag der Anmeldung:
**14.01.2009 Patentblatt 2009/03**

(73) Patentinhaber: **Senvion SE**
**22297 Hamburg (DE)**

(72) Erfinder: **Krüger, Thomas**
**24784 Westerrönfeld (DE)**

(74) Vertreter: **Seemann, Ralph**
**Patentanwälte**
**Seemann & Partner**
**Raboisen 6**
**20095 Hamburg (DE)**

(56) Entgegenhaltungen:
**EP-A1- 1 524 433      EP-A1- 1 596 493**
**EP-A1- 1 672 372      WO-A1-2007/104306**
**US-A- 4 189 648       US-A- 4 635 209**

• **WILMAR HERNANDEZ: "A Survey on Optimal Signal Processing Techniques Applied to Improve the Performance of Mechanical Sensors in Automotive Applications" SENSORS, MDPI, BASEL, SU, Bd. 7, 27. Januar 2007 (2007-01-27), Seiten 84-102, XP007902715 ISSN: 1424-8220**

EP 2 014 915 B1

**Beschreibung**

Die Erfindung betrifft ein Verfahren zum Betrieb einer Windenergieanlage mit einem Rotor und einer mit dem Rotor verbundenen Drehvorrichtung, wobei eine Rotordrehzahl und eine Drehvorrichtungsdrehzahl über ein vorgebbares Übersetzungsverhältnis miteinander in Beziehung stehen, wobei die Drehvorrichtungsdrehzahl ermittelt wird, wobei zur Ermittlung der Drehvorrichtungsdrehzahl ein Drehzahlmesswert erfasst wird.

Die Drehzahlerfassung ist eine wichtige Komponente des Steuerungs- und Regelungssystems einer Windenergieanlage. Im Rahmen der Erfindung wird unter einer Regelvorrichtung insbesondere auch eine Steuerungsvorrichtung verstanden. Zur Erzielung einer schnellen Reaktionszeit erfolgt die Drehzahlerfassung auf der schnellen Seite des Triebstrangs bzw. der Abtriebseite eines Getriebes. Es wird eine mehrpulsige Drehzahlmessung durchgeführt. Dazu wird auf der Kupplungsscheibe oder an einer Ausgangswelle des Getriebes eine hochgenau gefertigte, mit Nocken versehene Drehzahlmessscheibe bzw. Geberscheibe montiert, die über einen, beispielsweise induktiven, Näherungsschalter abgetastet wird. Hierzu muss der Abstand zwischen zwei Nocken sehr genau erfasst werden, beispielsweise muss die Winkelteilung der Drehzahlmessscheibe eine Toleranz im Bereich von ca. 1/100° haben. Diese Fertigungsgenauigkeit wird nur mit großem Aufwand erreicht. Zudem existieren viele Windenergieanlagen mit einem deutlich gestörten Drehzahlsignalverhalten.

Aus der EP 1 524 433 A1 ist ein Verfahren zur Drehzahlregelung einer Windenergieanlage bekannt, wobei mit Hilfe einer Geberanordnung mit mindestens einem Geberabschnitt und einer Sensoranordnung mit mindestens zwei Sensoren, die bei einer relativen Drehbewegung zwischen Geberanordnung und Sensoranordnung auf den Geberabschnitt ansprechen, durch Auswertung der Signale der Sensoranordnung die Relativdrehzahl errechnet wird, wobei die Zeit t, die jeweils einen Geberabschnitt zwischen zwei im festen Abstand voneinander, in Drehrichtung hintereinander angeordneten Sensoren benötigt, gemessen wird, und anhand der Zeit t und den geometrischen Gegebenheiten von Geber- und Sensoranordnung die Drehzahl n errechnet wird, und wobei ein der errechneten Drehzahl entsprechendes Drehzahl-Istsignal auf einen Regler gegeben wird, der mindestens ein Stellsignal $v_i$ auf eine Verstellvorrichtung für eine Blattverstellung eines Rotors gibt, wenn das Drehzahl-Istsignal von einem Drehzahl-Sollwert abweicht.

US 4 189 648 A offenbart eine Windenergieanlage, bei der eine Rotordrehzahl gemessen wird, wobei dieser gemessene Wert als Eingangsgröße einer Blattwinkelverstellsteuerung dient. Die Blattwinkelverstellsteuerung weist ein so genanntes "rotor speed control schedule" auf, deren Ergebnis ein Rotorblattwinkel ist.

EP 1 596 493 A1 offenbart ein Verfahren zum Messen der Drehzahl eines EC-Motors, der ein Primärteil mit einer Wicklung und ein Sekundärteil mit in Umfangsrichtung zueinander versetzten, abwechselnd in zueinander entgegengesetzte Richtungen magnetisierten Magnetsegmenten aufweist, die Toleranzen hinsichtlich ihrer Positionierung und/oder ihrer Abmessung haben. Zur Bildung eines Drehzahlsignals wird das Lagemessignal differenziert.

Es ist Aufgabe der vorliegenden Erfindung, das eingangs genannte Verfahren zum Betrieb einer Windenergieanlage mit einem Rotor und einer mit dem Rotor verbundenen Drehvorrichtung, wobei eine Rotordrehzahl und eine Drehvorrichtungsdrehzahl über ein vorgebbares Übersetzungsverhältnis miteinander in Beziehung stehen, wobei die Drehvorrichtungsdrehzahl ermittelt wird, wobei zur Ermittlung der Drehvorrichtungsdrehzahl ein Drehzahlmesswert erfasst wird, dadurch weiterzubilden, dass in relativ kurzer Zeit eine sehr genau ermittelte Drehvorrichtungsdrehzahl bestimmt werden kann, die der tatsächlichen Drehzahl der Drehvorrichtung im Wesentlichen entspricht. Hierdurch können Messfehler durch Ungenauigkeiten der Messscheibe bzw. einer Messvorrichtung weitgehend eliminiert werden.

Gelöst wird diese Aufgabe durch ein Verfahren zum Betrieb einer Windenergieanlage mit einem Rotor und einer mit dem Rotor verbundenen Drehvorrichtung, wobei eine Rotordrehzahl und eine Drehvorrichtungsdrehzahl über ein vorgebbares Übersetzungsverhältnis miteinander in Beziehung stehen, wobei die Drehvorrichtungsdrehzahl ermittelt wird, wobei zur Ermittlung der Drehvorrichtungsdrehzahl ein Drehzahlmesswert erfasst wird, wobei der Drehzahlmesswert mit einem zeitweise variablen Korrekturwert korrigiert wird, so dass sich die ermittelte Drehvorrichtungsdrehzahl ergibt, wobei die ermittelte Drehvorrichtungsdrehzahl als Istwert in einen Regler der Windenergieanlage eingespeist wird, wobei zur Bestimmung des Korrekturwerts des Drehzahlmesswerts eine Differenz oder ein Quotient des Drehzahlmesswertes zu einem Drehzahlmesswertmittelwert gebildet wird.

Durch Verwendung eines zeitweise variablen Korrekturwerts zur Korrektur des Drehzahlmesswertes, wodurch sich die ermittelte Drehvorrichtungsdrehzahl ergibt, ergibt sich eine sehr genaue Anpassung eines Drehzahlkorrekturwertes, so dass die ermittelte Drehvorrichtungsdrehzahl nach wenigen Iterationsschritten im Wesentlichen der tatsächlichen Drehvorrichtungsdrehzahl entspricht. Der zeitweise variable Korrekturwert entspricht insbesondere auch einem adaptiven Korrekturwert bzw. einem angepassten Korrekturwert, der über eine gewisse Zeit variabel angepasst wird. Dieses führt zu einer sehr genau ermittelten Drehvorrichtungsdrehzahl. Durch die Erfindung können Messfehler weitgehend eliminiert werden, so dass der ermittelte Drehvorrichtungsdrehzahlwert sehr gut als Istwert für eine Regelvorrichtung der Windenergieanlage dienen kann.

Vorzugsweise werden mehrere Drehzahlmesswerte je Umdrehung der Drehvorrichtung erfasst und mit jeweils einem wenigstens zeitweise variablen Korrekturwert korrigiert. Eine relativ große Genauigkeit der ermittelten Drehvorrichtungsdrehzahl ist dann gegeben, wenn zur Bestimmung des Korrekturwerts des Drehzahlmesswerts eine Differenz oder ein Quotient des Drehzahlmesswertes zu einem Drehzahlmesswertmittelwert gebildet wird. Vorzugsweise werden je volle Umdrehung der Drehvorrichtung ein Drehzahlmesswertmittelwert der während der Umdrehung erfassten Drehzahlmesswerte gebildet. Ein genau ermittelter Drehzahlmesswert ergibt sich dann, wenn eine Ausgleichskurve, insbesondere Ausgleichsgerade, zwischen zwei aufeinander folgenden Drehzahlmesswertmittelwerten gebildet wird, wobei zur Bestimmung des Korrekturwertes des Drehzahlmesswertes eine Differenz oder ein Quotient des Drehzahlmesswertes zu der Ausgleichskurve gebildet wird. Anstelle einer Ausgleichsgeraden kann als Ausgleichskurve auch eine logarithmische Funktion denkbar sein, oder eine Funktion, die in Abhängigkeit der Drehzahlmesswerte eine Wichtung des Drehzahlmesswerts zur Variation der Ausgleichsgeraden vorsieht. Es kann auch eine Ausgleichskurve gebildet werden, die eine vorher bestimmte Ausgleichskurve bzw. Ausgleichsgerade zu den Drehzahlmesswertmittelwerten hinzu berücksichtigt, beispielsweise durch Bildung eines Mittelwerts einer gebildeten Ausgleichsgerade mit der folgenden zu bildenden Ausgleichsgerade, wobei die erste der beiden Ausgleichsgeraden auch gewichtet sein kann, beispielsweise mit dem Faktor 2 oder 1,5.

Vorzugsweise werden die gebildeten Differenzen oder Quotienten zur Ermittlung der Drehvorrichtungsdrehzahl der Drehvorrichtung gefiltert. Insbesondere vorzugsweise umfasst der Filter eine Differenzengleichung bzw. ist insbesondere vorzugsweise eine Differenzengleichung. Hierdurch wird eine sehr genau ermittelte Drehvorrichtungsdrehzahl mit einer kurzen Berechnungszeit möglich.

Bevorzugt werden je volle Umdrehung der Drehvorrichtung N Drehzahlmesswerte erfasst, wobei N eine natürliche Zahl ist, die vorzugsweise eine gerade Zahl ist.

In einer Weiterbildung des erfindungsgemäßen Verfahrens wird überprüft, ob jeder erfassbare Drehzahlmesswert erfasst wird. Ferner vorzugsweise wird jeder erfasste Drehzahlmesswert kontinuierlich korrigiert.

Besonders bevorzugt ist es, wenn der zeitweise variable Korrekturwert nach einer vorgebbaren Zeit, einer vorgebbaren Anzahl von Umdrehungen und/oder nach Unterschreiten einer vorgebbaren Obergrenze einer Varianz eines ersten Korrekturwertes einer Umdrehung der Drehvorrichtung zum ersten Korrekturwert der nächsten Umdrehung der Drehvorrichtung fest eingestellt wird. Hierdurch ist der zeitweise variable Korrekturwert entsprechend nach der vorgebbaren Zeit, der vorgebbaren Anzahl von Umdrehungen bzw. nach Unterschreiten der vorgebbaren Obergrenze fest eingestellt, wobei für jeden Drehzahlmesswert ein jeweils fest eingestellter Korrekturwert vorgesehen ist, beispielsweise in Form eines Faktors, der auf den dann jeweils gemessenen Drehzahlmesswert aufmultipliziert wird, um die ermittelte Drehvorrichtungsdrehzahl zu bilden oder in Form eines additiven Terms.

Vorzugsweise geschieht die Einspeisung der ermittelten Drehvorrichtungsdrehzahl als Istwert in eine Regelvorrichtung der Windenergieanlage zur Einstellung des Rotorblatteinstellwinkels und/oder zur Einstellung von elektrischen Parametern eines elektrischen Systems der Windenergieanlage, insbesondere der Leistung, des Drehmoments oder der Phase der Wechselspannung.

Vorzugsweise wird die Drehvorrichtungsdrehzahl begrenzt, wenn ein, insbesondere im Betrieb anpassbarer, vorgebbarer Drehzahlbereich über- oder unterschritten wird.

Es ist zweckmäßig, wenn zwischen zwei aufeinander folgenden Drehzahlmesswerten und/oder zwei aufeinander folgenden Drehzahlmesswertmittelwerten eine vorgebbare Differenz überschritten wird, dass der letzte Drehzahlmesswert und/oder Drehzahlmesswertmittelwert ignoriert wird. Vorzugsweise wird der Korrekturwert auf einen vorgebbaren Maximalwert begrenzt, wenn der Betrag der Differenz des Drehzahlmesswertes zu einem Drehzahlmesswertmittelwert einen vorgebbaren Wert übersteigt.

Vorzugsweise wird in den vorgenannten Fällen eine Fehlermeldung ausgelöst, so dass überprüft werden kann, wie ein entsprechender Fehler entstehen konnte.

Es ist vorzugsweise ein Computerprogramm mit Programmcode-Mitteln vorgesehen, die angepasst sind, um das erfindungsgemäße Verfahren auszuführen, wenn das Computerprogramm, insbesondere in einer Regelvorrichtung einer Windenergieanlage, läuft. vorzugsweise ist das eben beschriebene Computerprogramm auf einem von einem Computer lesbaren Datenträger gespeichert. Es ist ferner vorzugsweise eine Regelvorrichtung einer Windenergieanlage mit einem in der Regelvorrichtung ablaufenden erfindungsgemäßen Verfahren versehen, das vorstehend beschrieben wurde.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1    schematisch ein Blockbild einer üblichen Windenergieanlage,

Fig. 2    schematisch eine Drehzahlmessanordnung für die Windenergieanlage nach Fig. 1,

Fig.3    ein schematisches Diagramm eines Drehzahlsignals über der Zeit,

Fig. 4    ein schematisches Diagramm einer gemessenen Drehzahl über der Zeit,

Fig. 5        schematisch die berechneten Drehzahldifferenzen für die einzelnen Nocken einer Messscheibe,

Fig. 6a       in einer schematischen Darstellung die gemessene Drehzahl über der Zeit,

Fig. 6b       eine schematische Darstellung der bestimmten Drehzahl über der Zeit nach der Erfindung aufgrund der Messung aus Fig. 6a

Fig. 6c       eine schematische Darstellung der tatsächlichen Drehzahl über der Zeit.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

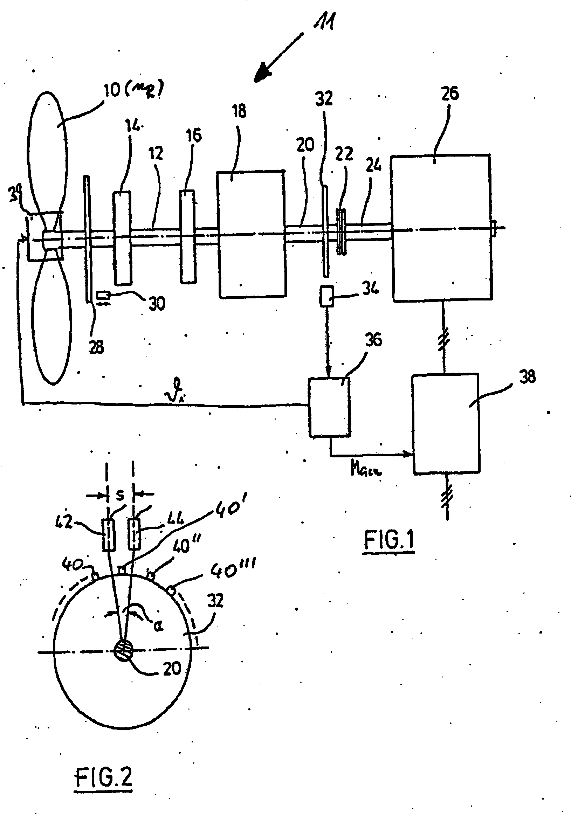

Fig. 1 zeigt einen Rotor 10 einer Windenergieanlage 11, dessen Welle 12 in zwei Lagern 14, 16 gelagert ist. Die Welle 12 ist die Eingangswelle eines nicht weiter beschriebenen Getriebes 18, das die Drehzahl der Welle auf eine höhere Drehzahl übersetzt, beispielsweise um den Faktor 100. Eine Ausgangswelle 20, des Getriebes 18 ist über eine Kupplung 22 mit einer Welle 24 eines Drehstromgenerators 26 gekoppelt. Zwischen dem Windrotor 10 und dem ersten Lager 14 ist eine Arretierscheibe 28 drehfest auf der Welle 12 angeordnet, die mit einem Verriegelungselement 30 zusammenwirkt. Wird das Verriegelungselement 30 zum Beispiel in eine Öffnung oder Ausnehmung der Arretierscheibe 28 eingeführt, ist die Welle 12 damit an einer Drehung gehindert. Nahe der Kupplung 22 ist eine Geberscheibe 32 drehfest auf dem Wellenabschnitt 20 angeordnet. Sie wirkt mit einer Sensoranordnung 34 zusammen, deren Signale auf einen Rechner 36 gegeben werden. Der Rechner 36 gibt als Regler ein Momenten-Stellsignal auf einen Umrichter 38 für den vom Generator 26 erzeugten Wechselstrom. Der Umrichter erzeugt Wechselstrom mit entsprechenden vorgebbaren Parametern zwecks Einspeisung in ein Netz. Es sei erwähnt, dass es mit Hilfe einer lastoptimierten Regelung des Umrichters 38 möglich ist, eine elektronische Schwingungsdämpfung für den Triebstrang nach Fig. 1 zu realisieren. Für eine derartige Regelung ist eine genaue Erfassung der Drehzahl am Triebstrang erforderlich.

Der Rotor 10 enthält eine Blattverstellvorrichtung 39 für die Blätter des Rotors 10. Vom Rechner 36 wird mindestens ein Stellsignal $\nu_i$ auf die Blattverstellvorrichtung 39 gegeben. Bei zwei oder mehr Blättern eines Rotors kann je Blatt ein Stellsignal erzeugt werden. Der Regler befindet sich beispielsweise im Rechner 36. Das Drehzahl-Istsignal bzw. die gemäß der Erfindung ermittelte Drehvorrichtungsdrehzahl wird im Rechner 36 aus den Signalen der Sensoranordnung 34 errechnet und kann beispielsweise mit einem Drehzahl-Sollwertsignal verglichen werden, um mindestens ein Stellsignal $\upsilon_i$ für die Blattverstellvorrichtung 39 zu ermitteln.

In Fig. 2 ist zu erkennen, dass die Geberscheibe 32 an ihrem Umfang eine Reihe von radialen Nocken 40 aufweist, die einen bestimmten gleichen Abstand voneinander haben. Am Umfang der Nockenscheibe 32 sind zwei Sensoren 42, 44 in einem Abstand s angeordnet. Die in Drehrichtung der Geberscheibe hintereinander angeordneten Sensoren 42, 44 ergeben im Wesentlichen die Sensoranordnung 34 nach Fig. 1. Alternativ kann auch nur ein Drehzahlsensor vorgesehen sein. Anstelle der Geberscheibe 32 in Form einer Nockenscheibe kann auch eine Lochscheibe vorgesehen sein. Der Abstand der Nocken 40 ist vorzugsweise größer als der Abstand s der Sensoren 42, 44. Die Sensoren 42, 44 sind vorzugsweise radial angeordnet, was nicht dargestellt ist, so dass der Abstand keine gerade Strecke, sondern einen Bogen mit dem Bogenwinkel $\alpha$ ist. Danach ergibt sich die Drehzahl n aus $\alpha/(360° * t)$, wobei $\alpha$ der Bogenwinkel zwischen den Sensoren und t die Zeit ist, welche ein Nocken vom ersten zum zweiten Sensor benötigt.

Die Geberscheibe 32 kann beispielsweise einteilig aus Metall, beispielsweise Eisen, gefertigt sein, und die Sensoren 42, 44 können als Näherungssensoren ausgebildet sein, die ein Signal erzeugen, wenn ein Nocken 40 sich in die Nähe des Sensors 42, 44 begibt. Bei Betrachtung eines einzelnen Nocken, beispielsweise Nocken 40', ergeben sich annähernd Rechteckimpulse als Sensorsignal, wobei die Periode des Signals eine Zeit t aufweist, die die ist, die ein Nocken 40, 40', 40", 40''' für die Strecke zwischen Sensor 42 und Sensor 44 benötigt, wenn sich die Geberscheibe 34 dreht. Die Zeit t wird im Rechner 36 gemessen und im Rechner erfolgt eine Bestimmung des Drehzahlmesswertes nach der Formel $rpm_i = \alpha /(360°*t)$ oder $rpm_i = s/t*U$, wobei $\alpha$ bzw. s der Abstand der Sensoren ist, t die Zeit und U der Umfang der Geberscheibe 34, und zwar im Bereich der radialen Enden der Nocken 40.

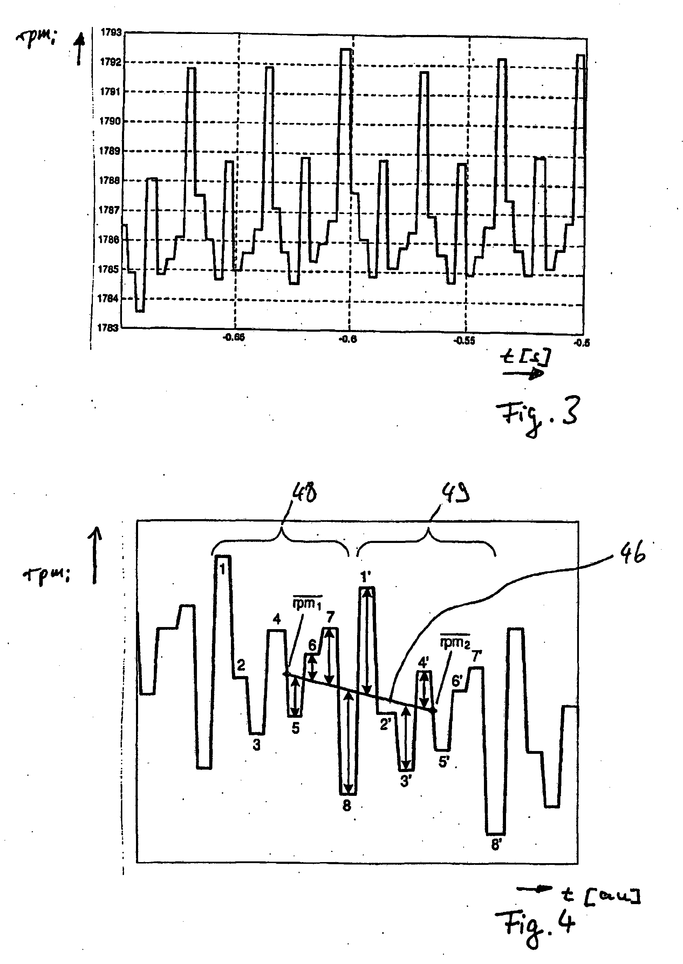

Nun ist es so, dass die Geberscheibe 34, die auch als Kupplungsscheibe ausgebildet sein kann bzw. auf der Kupplungsscheibe kann die Drehzahlmessscheibe 34 bzw. Geberscheibe montiert sein, eine hochgenau gefertigte Drehzahlmessscheibe sein sollte. Die mittlere Messverzögerung entspricht der Hälfte des Zeitraums zwischen dem Durchlaufen zweier Nocken. Bei einer Anzahl von N = 8 Nocken und einer Drehzahl von 1.800 U/min beträgt die Messverzögerung somit 2,1 ms. Das Problem eines Messverfahrens ist es, dass der Abstand zwischen zwei Nocken sehr genau erfasst werden muss und dass die Winkelteilung der Drehzahlscheibe eine Toleranz im Bereich von ca. 1/100° haben muss. Diese Fertigungsgenauigkeit zu erreichen ist problematisch, denn wie sich gezeigt hat, existieren diverse Windenergieanlagen mit stark gestörten Drehzahlsignalen, wie beispielsweise in Fig. 3 dargestellt ist. Fig. 3 zeigt hierbei einen typischen Verlauf eines erfassten Drehzahlsignals bzw. eines Drehzahlmesswertes $rpm_i$ über der Zeit in Sekunden bei einer entsprechenden Ungenauigkeit der Drehzahlmessscheibe bzw. Geberscheibe 32. Wie aus Fig. 3 entnehmbar ist, schwankt die gemessene Drehzahl $rpm_i$ zwischen 1.783,5 und 1,792,5 Umdrehungen pro Minute.

Durch das erfindungsgemäße Verfahren kann der durch die Ungenauigkeit der Messscheibe bedingte Messfehler weitgehend eliminiert werden. Das Drehzahlsignal bzw. die ermittelte Drehvorrichtungsdrehzahl $rpm_{i,f}$ kann so vom Regler 36 hochdynamisch weiterverarbeitet werden, was beispielsweise für die optimale Funktion des Triebstrangdämpfers wichtig ist. Es existiert im Stand der Technik kein Verfahren zur Korrektur der Toleranzen in der Messscheibe. Es gibt lediglich Verfahren zur digitalen Filterung von Signalen, beispielsweise ein FIR-Filter, z.B. zur gleitenden Mittelwertbildung, oder ein IIR-Filter, beispielsweise Butterworth, Chebsyshev oder ein elliptischer Filter. Diese digitalen Filter können zwar Ungenauigkeiten des gemessenen Drehzahlsignals bzw. des Drehzahlmesswertes $rpm_i$ glätten, haben aber den Nachteil, dass sie das Signal erheblich verzögern. Die Verzögerungszeit liegt bei entsprechend geeigneter Auslegung eines Filters zwischen 10 und 15 ms, so dass die Dynamik der Regelung deutlich verschlechtert wird. Außerdem ist der Entwurf entsprechender Filter sehr kompliziert und schwierig.

Das erfindungsgemäße Verfahren basiert darauf, dass sich das Verfahren bzw. der Filter an die mit Ungenauigkeiten behaftete Geometrie der Messscheibe bzw. Geberscheibe 34 anpasst. Hierbei zählt das Verfahren die Nocken der Drehzahlscheibe bzw. der Geberscheibe 32 mit und registriert, welcher Nocken zuletzt den Sensor passiert hat. Der an dem Nocken i gemessene Drehzahlwert bzw. Drehzahlmesswert $rpm_i$ wird dann durch einen Korrekturfaktor bzw. ein Korrekturglied $rpm_{i,c}$ berichtigt. Der gefilterte Wert der Drehzahl bzw. die bestimmte Drehzahl $rpm_{i,f}$ ergibt sich also zu

$$\mathbf{rpm_{i,f}} = \mathbf{rpm_i} - \mathbf{rpm_{i,c}} \qquad . \qquad\qquad \textbf{(Gl.1)}$$

Die Bestimmung der Korrekturfaktoren geschieht fortlaufend und ist in Figur 4 verdeutlicht. Ein Adaptionsschritt des Filters beginnt immer dann, wenn die Messscheibe bzw. Geberscheibe 32 zwei volle Umdrehungen durchgeführt hat. Die zu den einzelnen Nocken gehörenden Drehzahlmesswerte der einzelnen Umdrehungen $rpm_{i,1}$ und $rpm_{i,2}$ mit i = 1 bis N, wobei N in diesem Fall durch zwei teilbar ist, sind in der Abbildung mit 1 bis 8 für die Umdrehung 1 bzw. 1' bis 8' für die Umdrehung 2 bezeichnet. Die Nummerierung der Nocken ist dabei zufällig bzw. der Beginn der Nummerierung ist zufällig und hängt nur davon ab, wann das Verfahren gestartet wird.

Nach Vollendung zweier Umdrehungen wird eine Ausgleichsgerade 46 vom Mittelpunkt der Umdrehung 1, die mit der Bezugsziffer 48 bezeichnet ist, zum Mittelpunkt der Umdrehung 2, die mit der Bezugsziffer 49 bezeichnet ist, bestimmt. Allgemein gesagt handelt es sich um die m.Umdrehung 48 und die (m+1).Umdrehung 49, wobei m eine natürliche Zahl ist. Als Mittelpunkt der Umdrehung wird der Übergang zwischen den Nocken N/2 und N/2+1 definiert. Die Ausgleichsgerade wird dann durch die lineare Verbindung der arithmetischen Mittelwerte der Umdrehungen 1 und 2 bzw. m und (m+1) bestimmt. Diese Mittelwerte werden mit $\overline{rpm_1}$ und $\overline{rpm_2}$ bezeichnet. Diese werden wie folgt bestimmt:

$$\overline{rpm_1} = \frac{1}{N}\sum_{i=1}^{N} rpm_{i,1}$$

$$\overline{rpm_2} = \frac{1}{N}\sum_{i=1}^{N} rpm_{i,2} \qquad\qquad \textbf{(Gl.2)}$$

Für die weitere Rechnung werden jeweils die zweite Hälfte der ersten Umdrehung sowie die erste Hälfte der zweiten Umdrehung betrachtet. Die Drehzahl entlang der Ausgleichsgeraden wird durch Interpolation über die einzelnen Nocken bestimmt. Dabei gilt für die zweite Hälfte der ersten Umdrehung

$$rpm_{i,a} = \overline{rpm_1} + \left(\overline{rpm_2} - \overline{rpm_1}\right)\frac{2i - N - 1}{2N} \quad \text{für } i = N/2+1 \dots N \qquad \textbf{(Gl.3)}$$

während für die erste Hälfte der zweiten Umdrehung gilt

$$rpm_{i,a} = \overline{rpm_1} + \left(\overline{rpm_2} - \overline{rpm_1}\right)\frac{2i+N-1}{2N} \quad \text{für } i = 1 \ldots N/2 \tag{Gl.4}$$

Als nächstes wird die Differenz zwischen den Drehzahlmesswerten N/2+1...N sowie 1...N/2 und dem interpolierten Wert der Ausgleichsgeraden bestimmt

$$\Delta rpm_i = rpm_{i,1} - rpm_{i,a} \quad \text{für } i = N/2+1 \ldots N \tag{Gl.5}$$

sowie

$$\Delta rpm_i = rpm_{i,2} - rpm_{i,a} \quad \text{für } i = 1 \ldots N/2 \tag{Gl.6}$$

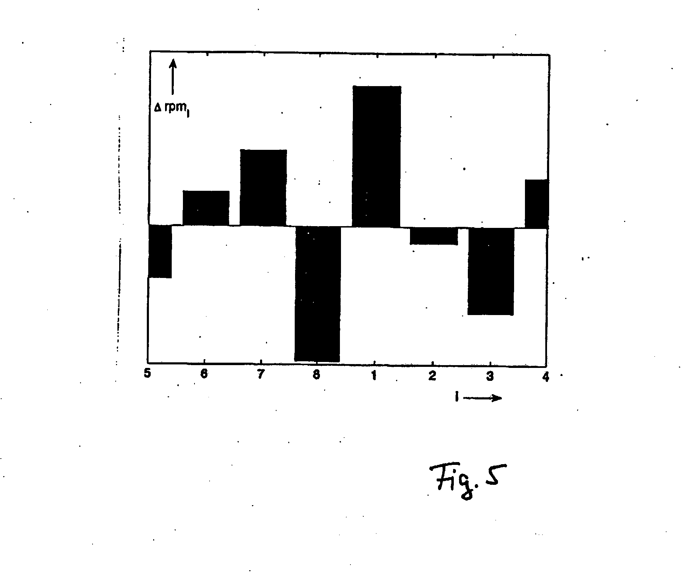

So ergeben sich die entsprechenden Drehzahldifferenzen $\Delta rpm_i$, die durch die Pfeile in Fig. 4 erkennbar sind und der besseren Darstellbarkeit wegen noch einmal in Fig. 5 schematisch dargestellt sind, und zwar über die Nockenzahl.
Die so bestimmten N Drehzahldifferenzen werden in N Filter als Eingangsgröße gegeben. Dabei wird für jede Nocke folgende Differenzengleichung abgearbeitet

$$rpm_{i,c}(t+1) = A\,rpm_{i,c}(t) + (1-A)\,\Delta rpm_i(t), \quad rpm_{i,c}(0)=0, \quad i=1\ldots N, \quad 0<A<1 \tag{Gl.7}$$

Hierin bezeichnet $rpm_{i,c}(t)$ den sich allmählich aufbauenden Korrekturwert für die i-te Nocke der Geberscheibe 32. Über den Filterparameter A kann bestimmt werden, wie schnell sich der Filter an die Drehzahlscheibe adaptiert. Je kleiner A gewählt wird, desto schnel-ler erfolgt die Adaption an die Messscheibe bzw. Geberscheibe 32, gleichzeitig sinkt die Präzision der Korrektur.

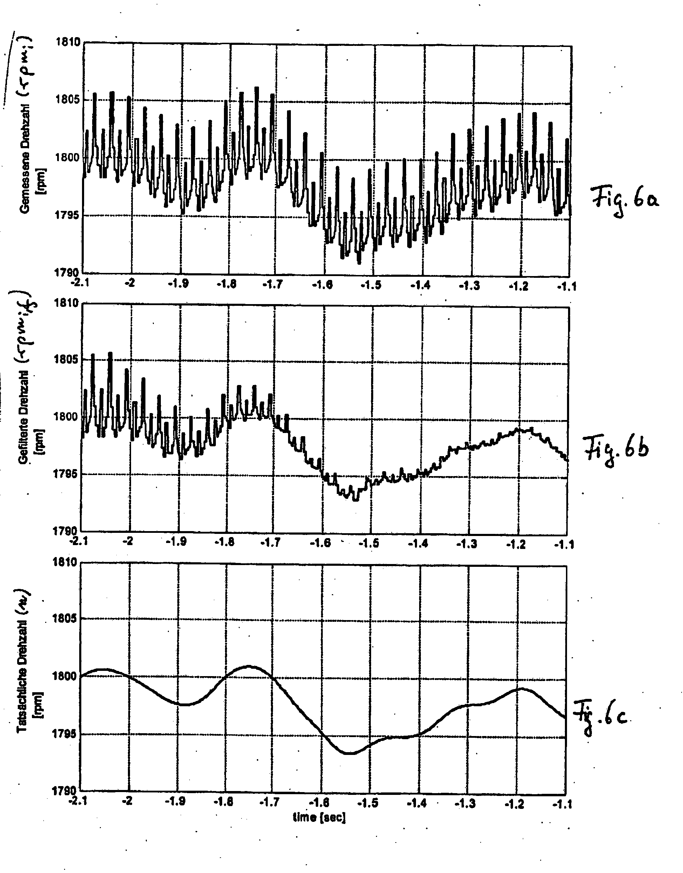

Fig. 6, und dort die Figuren 6a, 6b und 6c zeigen schematisch den Adaptionsprozess des erfindungsgemäßen Filters für A = 0,8. Die Initialisierung bzw. die Bestimmung des Korrekturwertes $rpm_{i,c}$ ist nach ca. 1 s abgeschlossen.
Die obere Fig. 6a zeigt den Drehzahlmesswert $rpm_i$ über der Zeit in s. Die mittlere Fig. 6b zeigt schematisch die ermittelte Drehvorrichtungsdrehzahl $rpm_{i,f}$ über der Zeit in t, und die untere Fig. 6c zeigt die tatsächliche Drehzahl n auch über der Zeit t in s. Es ist erkennbar, dass innerhalb von 1 s sich die ermittelte Drehvorrichtungsdrehzahl bzw. die gefilterte Drehzahl sehr genau an die tatsächliche Drehzahl n anpasst.
Der Vorteil des Verfahrens ist, dass die Korrektur der Drehzahlmesswerte ohne Signalverzögerung erfolgt. Nach einer Adaptionszeit von weniger als einer s vorzugsweise weniger als ½ s sind entsprechend gute Korrekturfaktoren bestimmbar. Die Initialisierung des Verfahrens bzw. die Adaption des Korrekturwertes ist nur einmal, beispielsweise beim Hochlauf der Windenergieanlage notwendig. Es existiert nur ein einziger Filterparameter, nämlich der Parameter A, so dass keine aufwändigen Auslegungsverfahren für den Filter notwendig sind. Nach Ermittlung der jeweiligen Korrekturwerte zu den jeweiligen Nocken können diese gespeichert werden und auf die Drehzahlmesswerte angewendet werden, beispielsweise durch einfache Multiplikation, wenn beispielsweise der Korrekturwert über einen Quotienten des Drehzahlmesswertes zu einem Drehzahlmesswertmittelwert oder zu der Ausgleichskurve gebildet wurde, oder Addition, beispielsweise bei Bestimmung des Korrekturwertes über eine Differenz des Drehzahlmesswertes zu einem Drehzahlmesswertmittelwert bzw. zu der Ausgleichskurve, so dass sich die ermittelte Drehvorrichtungsdrehzahl tatsächlich ohne Signalverzögerung bestimmen lässt. Erst bei auftretenden Fehlern kann es notwendig sein, dass Verfahren erneut zu initialisieren, um die Drehzahlkorrekturwerte erneut zu bestimmen. So ist es in einer vorteilhaften Ausführung der Erfindung vorgesehen, dass die Ermittlung der Korrekturwerte nur bei der Inbetriebnahme oder einem Hallentest erfolgt, und die gespeicherten Korrekturwerte nur dann neu bestimmt werden, wenn die Geberscheibe, z.B. durch einen Wartungseinsatz, verändert oder ausgetauscht wurde. In diesem Falle kann die Initialisierung des Verfahrens beim Hochlaufen der Windenergieanlage es vorsehen, dass die vorhandenen Korrekturwerte auf die vorliegende Impulsfolge synchronisiert werden, um die vorher bestimmten Korrekturwerte nicht erneut zu bestimmen, sondern den Impulsen korrekt zuzuordnen.

Probleme können beispielsweise auftreten, wenn die Nocken der Geberscheibe 32 nicht immer korrekt mitgezählt werden. Falls dieser Zählimpuls einmal ausfällt, kann wie folgt vorgegangen werden. Aus der zuletzt gültigen Drehzahl wird eine erwartete Impulslänge berechnet, diese beträgt beispielsweise 4,2 ms. Ist seit dem letzten erfassten Nockendurchgang mehr als diese Zeit verstrichen, wird die Nockenzählfunktion gestartet. Die Aktualisierung der Korrekturfaktoren sollte für diesen Durchlauf aber gesperrt werden, da offensichtlich ein Fehler bei der Drehzahlerfassung vorliegt. Die Überprüfung der Zeitüberschreitung erfolgt beispielsweise im 1 ms Task, d.h. im Beispiel t = 4,2 ms würde beim fünften Durchlauf in die Nockenzählroutine verzweigt werden. Wenn daraufhin auch weiterhin ein Nocken keinen Impuls liefert, wird eine Fehlermeldung generiert. Sofern im Folgenden alle Nocken einen Impuls liefern, kann das Verfahren neu initialisiert bzw. fortgeführt werden.

Zum Abfangen von Fehlern wird eine Erkennung auf Überschreitung des Drehzahl-Wertebereichs, z.B. eine maximale Drehzahl von 3.000 Umdrehungen/min, gesetzt sowie eine Erkennung von extremen Drehzahlsprüngen, beispielsweise von über 100 Umdrehungen/min.

In beiden Fällen sollten diese Drehzahlwerte gesperrt werden und auch das Korrekturverfahren nicht weiter durchgeführt werden. Ferner ist es sinnvoll, die Korrekturterme auf ein Limit, beispielsweise +/- 20 Umdrehungen/min zu begrenzen. Sofern diese Grenze erreicht bzw. überschritten wird, wird eine Fehlermeldung ausgelöst.

Bezugszeichenliste

| | |
|---|---|
| 1-8 | Sensorsignale m-te Umdrehung |
| 1'-8' | Sensorsignale (m+1)-te Umdrehung |
| 10 | Rotor |
| 11 | Windenergieanlage |
| 12 | Welle |
| 14 | Lager |
| 16 | Lager |
| 18 | Getriebe |
| 20 | Ausgangswelle |
| 22 | Kupplung |
| 24 | Welle |
| 26 | Drehstromgenerator |
| 28 | Arretierscheibe |
| 30 | Verriegelungselement |
| 32 | Geberscheibe |
| 34 | Sensoranordnung |
| 36 | Rechner |
| 38 | Umrichter |
| 39 | Blattstellvorrichtung |
| 40, 40', 40", 40''' | Nocken |
| 42, 44 | Sensor |
| 46 | Ausgleichsgerade |
| 48 | m. Umdrehung |
| 49 | (m+1). Umdrehung |
| $\upsilon_i$ | Stellsignal |
| $\alpha$ | Bogenwinkel |
| $n_R$ | Rotordrehzahl |
| $n$ | Drehvorrichtungsdrehzahl |
| $rpm_i$ | gemessene Drehzahl |
| $\Delta rpm_i$ | Drehzahldifferenz |
| $rpm_{I,f}$ | bestimmte Drehvorrichtungsdrehzahl |
| $\Delta rpm_1$ | erster Korrekturwert der m-ten Umdrehung |
| $\Delta rpm_{1'}$ | erster Korrekturwert der (m+1)-ten Umdrehung |
| $\overline{rpm_i}$ | Drehzahlmesswertmittelwert |
| $rpm_{i,c}$ | Drehzahlkorrekturwert |

**Patentansprüche**

1. Verfahren zum Betrieb einer Windenergieanlage (11) mit einem Rotor (10) und einer mit dem Rotor (10) verbundenen Drehvorrichtung (20, 22, 24), wobei eine Rotordrehzahl ($n_R$) und eine Drehvorrichtungsdrehzahl (n) über ein vorgebbares Übersetzungsverhältnis miteinander in Beziehung stehen, wobei die Drehvorrichtungsdrehzahl (n) ermittelt wird, wobei zur Ermittlung der Drehvorrichtungsdrehzahl (n) ein Drehzahlmesswert ($rpm_i$) erfasst wird, **dadurch gekennzeichnet, dass** der Drehzahlmesswert ($rpm_i$) mit einem zeitweise variablen Korrekturwert ($rpm_{i,c}$) korrigiert wird, so dass sich die ermittelte Drehvorrichtungsdrehzahl ($rpm_{i,f}$) ergibt, wobei die ermittelte Drehvorrichtungsdrehzahl ($rpm_{i,f}$) als Istwert in eine Regelvorrichtung (36) der Windenergieanlage (11) eingespeist wird, wobei zur Bestimmung des Korrekturwerts ($rpm_{i,c}$) des Drehzahlmesswertes ($rpm_i$) eine Differenz oder ein Quotient des Drehzahlmesswertes ($rpm_i$) zu einem Drehzahlmesswertmittelwert ($\overline{rpm_i}$) gebildet wird.

2. Verfahren nach Anspruch 1, **dadurch gekennzeichnet, dass** mehrere Drehzahlmesswerte ($rpm_i$) je Umdrehung der Drehvorrichtung (20, 22, 24) erfasst werden und mit jeweils einem wenigstens zeitweise variablen Korrekturwert ($rpm_{i,c}$) korrigiert werden.

3. Verfahren nach Anspruch 1 oder 2, **dadurch gekennzeichnet, dass** je volle Umdrehung der Drehvorrichtung (20, 22, 24) ein Drehzahlmesswertmittelwert ($\overline{rpm_i}$) der während der Umdrehung erfassten Drehzahlmesswerte ($rpm_i$) gebildet wird.

4. Verfahren nach Anspruch 3, **dadurch gekennzeichnet, dass** eine Ausgleichskurve (46), insbesondere Ausgleichsgerade, zwischen zwei aufeinander folgenden Drehzahlmesswertmittelwerten ($\overline{rpm_i}$, $\overline{rpm_{i+1}}$) gebildet wird, wobei zur Bestimmung des Korrekturwertes ($rpm_{i,c}$) des Drehzahlmesswertes ($rpm_i$) eine Differenz oder ein Quotient des Drehzahlmesswertes ($rpm_i$) zu der Ausgleichskurve (46) gebildet wird.

5. Verfahren nach Anspruch 4, **dadurch gekennzeichnet, dass** die gebildeten Differenzen oder Quotienten zur Ermittlung der Drehvorrichtungsdrehzahl (n, $rpm_{i,f}$) der Drehvorrichtung (20, 22, 24) gefiltert werden.

6. Verfahren nach Anspruch 5, **dadurch gekennzeichnet, dass** der Filter eine Differenzengleichung umfasst.

7. Verfahren nach einem der Ansprüche 1 bis 6, **dadurch gekennzeichnet, dass** je volle Umdrehung der Drehvorrichtung (20, 22, 24) N Drehzahlmesswerte ($rpm_i$) erfasst werden, wobei N eine natürliche Zahl ist.

8. Verfahren nach einem der Ansprüche 1 bis 7, **dadurch gekennzeichnet, dass** überprüft wird, ob jeder erfassbare Drehzahlmesswert ($rpm_i$) erfasst wird.

9. Verfahren nach Anspruch 7 oder 8, **dadurch gekennzeichnet, dass** jeder erfasste Drehzahlmesswert ($rpm_i$) kontinuierlich korrigiert wird.

10. Verfahren nach einem der Ansprüche 1 bis 9, **dadurch gekennzeichnet, dass** der zeitweise variable Korrekturwert ($rpm_{i,c}$) nach einer vorgebbaren Zeit (t), einer vorgebbaren Anzahl von Umdrehungen (48, 49) und/oder nach Unterschreiten einer vorgebbaren Obergrenze einer Varianz eines ersten Korrekturwertes ($rpm_{i,c}$) einer Umdrehung der Drehvorrichtung (20, 22, 24) zum ersten Korrekturwert ($rpm_{i,c}$) der nächsten Umdrehung der Drehvorrichtung (20, 22, 24) fest eingestellt wird.

11. Verfahren nach einem der Ansprüche 1 bis 10, **dadurch gekennzeichnet, dass** die Einspeisung der ermittelten Drehvorrichtungsdrehzahl ($rpm_{i,f}$) als Istwert in eine Regelvorrichtung (36) der Windenergieanlage (11) zur Einstellung des Rotorblatteinstellwinkels $\upsilon_i$ und/oder zur Einstellung von elektrischen Parametern eines elektrischen Systems (38) der Windenergieanlage (11), insbesondere der Leistung, des Drehmoments oder der Phase der Wechselspannung, geschieht.

12. Verfahren nach einem der Ansprüche 1 bis 11, **dadurch gekennzeichnet, dass** die Drehvorrichtungsdrehzahl (n, $rpm_{i,f}$) begrenzt wird, wenn ein, insbesondere im Betrieb anpassbarer, vorgebbarer Drehzahlbereich über- oder unterschritten wird.

13. Verfahren nach einem der Ansprüche 1 bis 12, **dadurch gekennzeichnet, dass**, wenn zwischen zwei aufeinander

folgenden Drehzahlmesswerten ($rpm_i$) und/oder zwei aufeinander folgenden Drehzahlmesswertmittelwerten ($\overline{rpm_i}$) eine vorgebbare Differenz überschritten wird, der letzte Drehzahlmesswert ($rpm_i$) und/oder Drehzahlmesswertmittelwert ($\overline{rpm_i}$) ignoriert wird.

**14.** Verfahren nach einem der Ansprüche 1 bis 13, **dadurch gekennzeichnet, dass**, wenn der Betrag der Differenz des Drehzahlmesswertes ($rpm_i$) zu einem Drehzahlmesswertmittelwert ($\overline{rpm_i}$) einen vorgebbaren Wert übersteigt, der Korrekturwert ($rpm_{i,c}$) auf einen vorgebbaren Maximalwert begrenzt wird.

**15.** Verfahren nach einem der Ansprüche 1 bis 14, **dadurch gekennzeichnet, dass** eine Fehlermeldung ausgelöst wird.

**16.** Computerprogramm mit Programmcode-Mitteln, die angepasst sind, um das Verfahren nach einem der Ansprüche 1 bis 15 auszuführen, wenn das Computerprogramm, insbesondere in einer Regelvorrichtung (36) einer Windenergieanlage (11), läuft.

**17.** Computerprogramm nach Anspruch 16, das auf einem von einem Computer lesbaren Datenträger gespeichert ist.

**18.** Regelvorrichtung einer Windenergieanlage (11) mit einem in der Regelvorrichtung (36) ablaufenden Verfahren nach einem der Ansprüche 1 bis 15.

**Claims**

**1.** A method of operating a wind turbine (11) with a rotor (10) and a rotating device (20, 22, 24) connected to the rotor (10), wherein a rotor speed ($n_R$) and a rotating device speed (n) are related to one another by a predeterminable transmission ratio, wherein the rotating device speed (n) is determined, wherein a speed measurement value ($rpm_i$) is detected in order to determine the rotating device speed (n), **characterised in that** the speed measurement value ($rpm_i$) is corrected with a correction value ($rpm_{i,c}$), which is variable over time so that the determined rotating device speed ($rpm_{i,f}$) is produced, wherein the determined rotating device speed ($rpm_{i,f}$) is stored as an actual value in a control device (36) of the wind turbine (11), wherein in order to determine the correction value ($rpm_{i,c}$) of the speed measurement value ($rpm_i$) a difference or a quotient of the speed measurement value ($rpm_i$) to an average value ($\overline{rpm_i}$) of the speed measurement value is formed.

**2.** A method as claimed in Claim 1, **characterised in that** a plurality of speed measurement values ($rpm_i$) are detected per revolution of the rotating device (20, 22, 24) and are corrected with a respective correction value ($rpm_{i,c}$), which is variable over time.

**3.** A method as claimed in Claim 1 or 2, **characterised in that** for each complete rotation of the rotating device (20, 22, 24), an average value ($\overline{rpm_i}$) of the speed measurement values ($rpm_i$) measured during the rotation is formed.

**4.** A method as claimed in Claim 3, **characterised in that** a best-fit curve (46), particularly a best-fit straight line, is formed between two successive average values ($\overline{rpm_i}$), ($\overline{rpm_{i+1}}$) of the speed measurement values, wherein in order to determine the correction value ($rpm_{i,c}$) of the speed measurement value ($rpm_i$) a difference or a quotient of the speed measurement value ($rpm_i$) to the best-fit curve (46) is formed.

**5.** A method as claimed in Claim 4, **characterised in that** the differences or quotients formed to determine the speed (n, $rpm_{i,f}$) of the rotating device (20, 22, 24) are filtered.

**6.** A method as claimed in Claim 5, **characterised in that** the filter includes a differential equation.

**7.** A method as claimed in one of Claims 1 to 6, **characterised in that** for each complete rotation of the rotating device (20, 22, 24), N speed measurement values ($rpm_i$) are determined, wherein N is a natural number.

**8.** A method as claimed in one of Claims 1 to 7, **characterised in that** a check is made to see whether every detectable speed measurement value ($rpm_i$) is detected.

**9.** A method as claimed in Claim 7 or 8, **characterised in that** each detected speed measurement value ($rpm_i$) is continuously corrected.

**10.** A method as claimed in one of Claims 1 to 9, **characterised in that** the correction value ($rpm_{i,c}$), which is variable over time, is set to be fixed after a predeterminable time (t), a predeterminable number of rotations (48, 49) and/or after a variance of a first correction value ($rpm_{i,c}$) of one rotation of the rotating device (20, 22, 24) from the first correction value ($rpm_{i,c}$) of the next rotation of the rotating device falls below a predeterminable upper threshold.

**11.** A method as claimed in one of Claims 1 to 10, **characterised in that** the supply of the determined rotating device speed ($rpm_{i,f}$) as an actual value into a control device (36) of the wind turbine (11) occurs to adjust the angle of attack $\upsilon_i$ of the rotor blade and/or to adjust electrical parameters of an electrical system (38) of the wind turbine (11), particularly the power, the torque or the phase of the alternating current.

**12.** A method as claimed in one of Claims 1 to 11, **characterised in that** the rotating device speed ($n, rpm_{i,f}$) is limited when the speed moves above or below a predeterminable range, particularly one which is adjustable in operation.

**13.** A method as claimed in one of Claims 1 to 12, **characterised in that** if a predeterminable difference between two successive speed measurement values ($rpm_i$) and/or two successive average values ($\overline{rpm_i}$) of the speed measurement values is exceeded, the last speed measurement value ($rpm_i$) and/or average value ($\overline{rpm_i}$) of the speeds is ignored.

**14.** A method as claimed in one of Claims 1 to 13, **characterised in that** when the magnitude of the difference of the speed measurement value ($rpm_i$) to an average value ($\overline{rpm_i}$) of the speed measurement values exceed a predeterminable value, the correction value ($rpm_{i,c}$) is limited to a predeterminable maximum value.

**15.** A method as claimed in one of Claims 1 to 14, **characterised in that** an error signal is triggered.

**16.** A computer program with program code means, which are adapted to perform the method as claimed in one of Claims 1 to 15 when the computer program runs, in particular, in a control device (36) of a wind turbine (11).

**17.** A computer program as claimed in Claim 16, which is stored on a data carrier readable by a computer.

**18.** A control device of a wind turbine (11) with a method as claimed in one of Claims 1 to 15 running in the control device (36).

**Revendications**

**1.** Procédé pour le fonctionnement d'une éolienne (11) comprenant un rotor (10) et un dispositif de rotation (20, 22, 24) relié au rotor (10), dans lequel, une vitesse du rotor ($n_R$) et une vitesse du dispositif de rotation (n) sont liées entre elles par l'intermédiaire d'un rapport de transmission apte à être prédéterminé, la vitesse du dispositif de rotation (n) étant déterminée et une valeur de mesure de la vitesse de rotation ($rpm_i$) étant enregistrée pour déterminer la vitesse du dispositif de rotation (n), **caractérisé en ce que** la valeur de mesure de la vitesse de rotation ($rpm_i$) est corrigée par une valeur de correction variable intermittente ($rpm_{i,c}$) de manière à obtenir la vitesse du dispositif de rotation déterminée ($rpm_{i,f}$), la vitesse du dispositif de rotation déterminée ($rpm_{i,f}$) étant introduite en tant que valeur réelle dans un dispositif de régulation (36) de l'éolienne (11) de manière à pouvoir déterminer la valeur de correction ($rpm_{i,c}$) de la valeur de mesure de la vitesse de rotation ($rpm_i$), une différence ou un quotient de la valeur de mesure de la vitesse de rotation ($rpm_i$) et de la valeur de mesure de la vitesse de rotation moyenne ($\overline{rpm_i}$) étant calculé.

**2.** Procédé selon la revendication 1, **caractérisé en ce qu'**une pluralité de valeurs de mesure de la vitesse de rotation ($rpm_i$) pour chaque rotation du dispositif de rotation (20, 22, 24) sont enregistrées et sont corrigées respectivement par au moins une valeur de correction variable intermittente ($rpm_{i,c}$).

**3.** Procédé selon la revendication 1 ou la revendication 2, **caractérisé en ce qu'**à chaque rotation complète du dispositif de rotation (20, 22, 24), une valeur de mesure de la vitesse de rotation moyenne ($\overline{rpm_i}$) est calculée tandis qu'est enregistrée, durant la rotation, la valeur de mesure de la vitesse de rotation ($rpm_i$).

4. Procédé selon la revendication 3, **caractérisé en ce qu'**une courbe d'égalisation (46), en particulier une ligne d'égalisation, est formée entre deux valeurs de mesure de la vitesse de rotation moyennes ($\overline{rpm_i}$), ($\overline{rpm_{i+1}}$) successives, dans lequel, pour déterminer la valeur de correction ($rpm_{i,c}$) de la valeur de mesure de la vitesse de rotation ($rpm_i$), il est calculé une différence ou un quotient de la valeur de mesure de la vitesse de rotation ($rpm_i$) et de la courbe d'égalisation (46).

5. Procédé selon la revendication 4, **caractérisé en ce que** les différences ou les quotients calculés pour déterminer la vitesse de rotation (n, $rpm_{i,f}$) du dispositif de rotation (20, 22, 24) sont filtrés.

6. Procédé selon la revendication 5, **caractérisé en ce que** le filtre comprend une équation différentielle.

7. Procédé selon l'une quelconque des revendications 1 à 6, **caractérisé en ce qu'**à chaque rotation complète du dispositif de rotation (20, 22, 24), N valeurs de mesure de la vitesse de rotation ($rpm_i$) sont enregistrées, N étant un nombre entier naturel.

8. Procédé selon l'une quelconque des revendications 1 à 7, **caractérisé en ce qu'**il est vérifié que chaque valeur de mesure de la vitesse de rotation ($rpm_i$) enregistrable est enregistrée.

9. Procédé selon la revendication 7 ou la revendication 8, **caractérisé en ce que** chaque valeur de mesure de la vitesse de rotation ($rpm_i$) enregistrée est corrigée de manière continue.

10. Procédé selon l'une quelconque des revendications 1 à 9, **caractérisé en ce que** la valeur de correction variable intermittente ($rpm_{i,c}$) est fixée après un temps prédéterminé (t), après un nombre prédéterminé de révolutions (48, 49) et / ou après avoir chuté en dessous d'une limite supérieure prédéterminée d'une variation d'une première valeur de correction ($rpm_{i,c}$) d'une révolution du dispositif de rotation (20, 22, 24) par rapport à une première valeur de correction ($rpm_{i,c}$) de la révolution suivante du dispositif de rotation (20, 22, 24).

11. Procédé selon l'une quelconque des revendications 1 à 10, **caractérisé en ce que** l'introduction de la vitesse du dispositif de rotation déterminée ($rpm_{i,f}$) en tant que valeur réelle se fait dans un dispositif de régulation (36) de l'éolienne (11) pour le réglage de l'angle des pales de rotor et / ou pour le réglage des paramètres électriques d'un système électrique (38) de l'éolienne (11), en particulier la puissance, le couple ou la phase de la tension alternative.

12. Procédé selon l'une quelconque des revendications 1 à 11, **caractérisé en ce que** la vitesse du dispositif de rotation (n, $rpm_{i,f}$) est limitée lorsqu'une plage de vitesse prédéterminée, en particulier réglable en cours de fonctionnement, est dépassée ou n'est pas atteinte.

13. Procédé selon l'une quelconque des revendications 1 à 12, **caractérisé en ce que**, lorsque qu'entre deux valeurs de mesure de la vitesse de rotation ($rpm_i$) successives et / ou deux valeurs moyennes de mesure de la vitesse de rotation ($\overline{rpm_i}$) successives, une différence prédéterminée est dépassée, la dernière valeur de mesure de la vitesse de rotation ($rpm_i$) et / ou la dernière valeur moyenne de mesure de la vitesse de rotation ($\overline{rpm_i}$) est ignorée.

14. Procédé selon l'une quelconque des revendications 1 à 13, **caractérisé en ce que**, si la valeur de la différence entre la valeur de mesure de la vitesse de rotation ($rpm_i$) et la valeur moyenne de mesure de la vitesse de rotation ($\overline{rpm_i}$) dépasse une valeur prédéterminée, la valeur de correction ($rpm_{i,c}$) est limitée à une valeur maximale apte à être déterminée.

15. Procédé selon l'une quelconque des revendications 1 à 14, **caractérisé en ce qu'**un message d'erreur est déclenché.

16. Programme informatique comprenant des moyens formant code de programme, qui sont adaptés à la mise en oeuvre du procédé selon l'une quelconque des revendications 1 à 15 lorsque le programme informatique est exécuté, en particulier dans un dispositif de régulation (36) d'une éolienne (11).

17. Programme informatique selon la revendication 16, étant stocké sur un support de données lisibles par un ordinateur.

18. Dispositif de régulation d'une éolienne (11), dans lequel le procédé selon l'une quelconque des revendications 1 à 15 est exécuté dans le dispositif de régulation (36).

FIG.1

FIG.2

Fig. 3

Fig. 4

Fig. 5

Fig. 6a

Fig. 6b

Fig.6c

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1524433 A1
- US 4189648 A
- EP 1596493 A1